# EUROPEAN PATENT APPLICATION

(11) **EP 0 578 902 A1**
(43) Date of publication of application: **19.01.1994**
(21) Application number: 92830392.4
(22) Date of filing: 17.07.1992
(51) Int. Cl.: A23N 12/08

(54) **Roasting system**

(71) Applicant: PETRONCINI SpA, I-44047 Sant'Agostino (Ferrara) (IT)
(72) Inventor: Farina, Stefano, I-40141 Bologna (IT)
(74) Representative: Sassatelli, Franco T., Dr.

(57) **Abstract**

The system foresees the production of heat and smoke in combustion chamber (1), by means of burner (2), which pass through a collector (3) communicating with a heat exchanger (4) such that heat is exchanged by induction to air drawn from outside by an air intake (5). The heated air flows from air intake (5) via pipe (6) into chamber (7) centrally including the combustion chamber (1). In this way said forced flow is overheated by contact with the walls of the combustion chamber (1) to the required temperature. The heated air flows via pipe (8) into roasting chamber (9) where it passes over the product when moving into roasting unit (10). Said hot air flow crosses the product so as to heat it to the required temperature and then the hot air is discharged with the roasting smoke in suspension, through pipe (11). The hot air is then sucked by an intake group (12) producing the forced circulation. Said gaseous flow comes finally to a cyclone separator (13) having the function to remove the bigger dimension particles from the air. The air/smoke suspension then passes to the atmosphere through an after burner (14). Where it is heated to a temperature (400°-700°) such that it ignites.

## Description

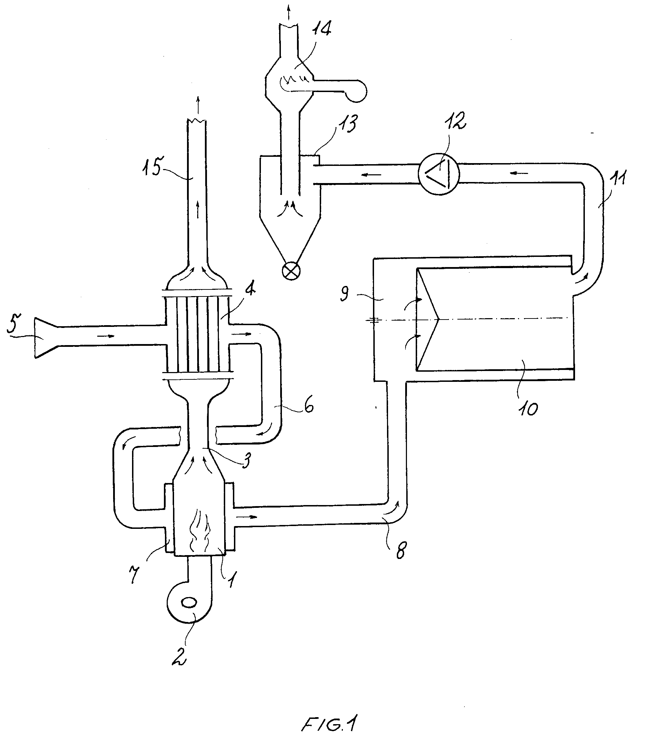

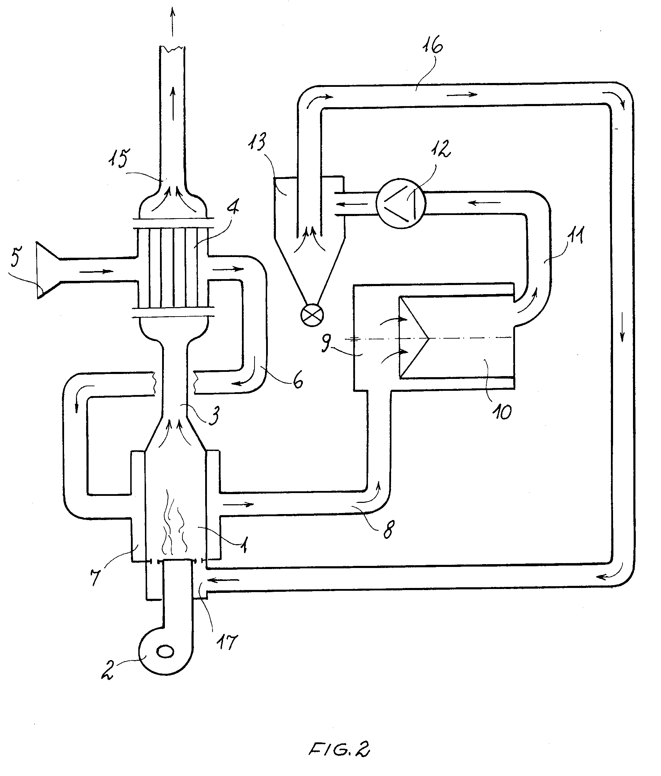

The invention refers to a new system realizing the heat gaseous flow for the roasting which principally comes to avoid the contact of the smokes coming from the heat generator with goods so excluding that polluting combustion residues come to put on the same goods. In a particular embodiment the system, re-employing the heat flow coming from the roasting, realizes and energy saving and brings to an ecological problem solution reducing the air pollution. The invented system may be particularly used in the roasting of goods for human nourishment such as coffee, barley, cacao, peanuts and similar. In the current roasting plants both in those intermittent, which generally use a perforated rotating bin, and in those continuous, which use a vibrator belt, a fluidized bed or similar, the working goods are crossing by a forced heat flow, coming from the combustion chamber, consists of a mixture made of the air sucked up from outside and of the smokes produced by the heat generator. Said gas flow, at a variable temperature from 200° to 850°, comes to run over the working goods in continuous movement into the roasting chamber so to exert a licked action on the goods surface which tends to give up the suspended solid particles such as the combustion residues. This comes to determine on goods a bringing of polluting substances, such as organic substances with presence of carbon monoxide, nitrogen, sulfur and other, which come to negatively affect both on the healthy qualities of the goods and on their own characteristics so to cause damage also to their aromatic qualities. Moreover said forced flow, getting out from the roasting chamber, is taken to a variable temperature from 400° to 800° to reduce the organic substance content in suspension into it before letting out the same outside. In comparison with this current system the invented system permits the complete problem solution using a new roasting plant which comes to avoid the contact of the combustion residues with the goods by means of a set realizing a heat induction transfer. In this way is preserved into the roasting goods both the healthy characteristic, so avoiding physical damages for the consumer, and the own characteristics so permitting the aromatic quality preservation. The invented system foresees the heat and smokes production into the combustion chamber 1, by means of the burner 2, and through the collector 3 their reaching into a heat exchanger 4 with distinct flows where they make over by induction their heat to an air flow sucked from outside by an air intake 5 and then they are discharged outwardly by natural ventilation pressure or by forced intake. The flow coming from the air intake 5 so heated is let by pipe 6 into chamber 7 centrally including the combustion chamber 1. In this way said forced flow is overheated by contact with the walls of the combustion chamber 1 to the needed temperature and by means of pipe 8 is coming in roasting chamber 9 where it runs over goods in movement into the roasting unit 10. Said heat air flow crosses the goods so to heat the same to the needed temperature and then it is discharged through the pipe 11 with in sospension the roasting smokes and it is then sucked by and intake group 12 forming the forced circulation. Said gaseous flow comes finally to cyclone separator 13 having the function to take from the air flow the bigger dimension particles. The flow so cleaning through a post-combustion unit 14, able to overheat the suspended residues give out by the working goods to a higher temperature to the ignition temperature, is then turn out into the outward environment to a variable temperature from 400° to 700°. The combustion flow, which is realized in the burner 2, after to have given its heat to the flow sucked by the air intake 5 into the heat exchanger 4 can be turn outward through pipe 15. In particolar system embodiment from the cyclone separator 13 the air flow, with in suspension what that still remain from the roasting, by pipe 16 comes to a collector 17, positioned at the lower end of the combustion chamber 1, which lets the same flow into the same combustion chamber so determining a further heat transfer. Moreover reaching the gaseous flow acting the heat recovery the combustion temperature, the suspended volatile substances come to burn in presence of an air overplus so going through a transformation which originates suspended no-polluting residues such as carbon dioxide, water vapor and other. Schematic forms of the invented system are illustrated in sheets 1 and 2. In sheet 1 fig. 1 is schematic view of the invented roasting plant which foresees the use of a set able to heat transfer by induction and with outward expulsion of the gaseous flow from which have before been taken the roasting residues of bigger dimensions. In sheet 2 fig. 2 is schematic view of an invented roasting plant characterized by a set able to heat transfer by induction as that in fig. 1 and moreover equipped for the heat flow recovering coming from roasting. In the different embodiments: the different elements, the auxiliary means, the combustion devices and the intake and heat exchanger devices can be different foreseen depending on the different needs.

## Claims

1. Roasting system which foresees the heat and smokes production into combustion chamber (1), by means of burner (2), and through a collector (3) their reaching into a heat exchanger (4) with distinct flows where they make over by induction their heat to an air flow sucked from outside by an air intake (5) and then they are discharged outwardly by natural ventilation pressure or by forced intake; in that the flow coming from the air intake (5) so heated is let by pipe (6) into chamber (7) centrally including the combustion chamber (1); characterized by the fact that said forced flow is overheated by contact with the walls of the combustion chamber (1) to the needed temperature and by means of pipe (8) is coming in roasting chamber (9) where it runs over goods in movement into roasting unit (10). Said heat air flow crosses the goods so to heat the same to the needed temperature and then it is discharged through pipe (11) with in sospension the roasting smokes and it is then sucked by and intake group (12) forming the forced circulation. Said gaseous flow comes finally to a cyclone separator (13) having the function to take from the air flow the bigger dimension particles. The flow so cleaning through a post-combustion unit (14), able to overheat the suspended residues give out by the working goods to a higher temperature to the ignition temperature, is then turn out into the outward environment to a variable temperature from 400° to 700°.

2. Roasting system, as per claim 1), characterized by the fact that the combustion flow, which is realized into the burner (2), after to have given its heat to the flow sucked by air intake (5) into the heat exchanger (4) can be turn outward through pipe (15).

3. Roasting system, as per claim 1), characterized by the fact that in particolar system embodiment from the cyclone separator (13) the air flow, with in suspension what that still remain from the roasting, by pipe (16) comes to a collector (17), positioned at the lower end of the combustion chamber (1), which lets the same flow into the same combustion chamber (1) so determining a further heat transfer.

4. Roasting system, as per claim 1), characterized by the fact that reaching the gaseous flow acting the heat recovery the combustion temperature, the suspended volatile substances come to burn in presence of an air overplus so going through a transformation which originates suspended no-polluting residue such as carbon dioxide, water vapor and other.
